# EUROPÄISCHE PATENTSCHRIFT

(11) **EP 1 638 665 B1**
(45) Veröffentlichungstag und Bekanntmachung des Hinweises auf die Patenterteilung: **06.12.2006**
(21) Anmeldenummer: 04763044.7
(22) Anmeldetag: 29.06.2004
(51) Int. Cl.: B01D 35/027, B01D 29/07

(54) **FILTER FÜR DAS GETRIEBEÖL IN AUTOMATIKGETRIEBEN VON KRAFTFAHRZEUGEN**
FILTER FOR THE TRANSMISSION OIL IN AUTOMATIC TRANSMISSIONS OF MOTOR VEHICLES
FILTRE DESTINE AU FILTRAGE DE L'HUILE A ENGRENAGES DANS DES BOITES DE VITESSES AUTOMATIQUES DE VEHICULES AUTOMOBILES

(30) Priorität: 01.07.2003 DE 20310102 U; 25.07.2003 DE 20311465 U
(43) Veröffentlichungstag der Anmeldung: 29.03.2006
(73) Patentinhaber: Filtertek S.A., F-60128 Plailly (FR)
(72) Erfinder: CHIGA, Antonio, F-77230 Dammartin en Groele (FR)
(74) Vertreter: Brose, D. Karl
(86) Internationale Anmeldenummer: PCT/EP2004/007038
(87) Internationale Veröffentlichungsnummer: WO 2005/002707

(56) Entgegenhaltungen:
- DE-A- 19 610 414
- DE-A- 19 731 766
- DE-U- 20 109 917
- FR-A- 649 682
- US-B1- 6 220 454
- US-B1- 6 409 864
- PATENT ABSTRACTS OF JAPAN Bd. 2003, Nr. 02, 5. Februar 2003 (2003-02-05) & JP 2002 306908 A (TOKYO ROKI CO LTD), 22. Oktober 2002 (2002-10-22)

## Beschreibung

Die Erfindung betrifft einen Filter für das Getriebeöl in Automatikgetrieben von Kraftfahrzeugen, mit einem aus einem Oberteil und einem mit diesem verbundenen Unterteil bestehenden Gehäuse, mit einem Einlass und einem Auslass, wobei zwischen Oberteil und Unterteil ein den Einlass von dem Auslass voneinander trennendes Filtermedium angeordnet ist, und wobei das Filtermedium um Stützkörper geführt und durch diese gehalten ist.

Derartige Filter für das Getriebeöl sind allgemein bekannt (z.B. DE 197 31 766 A, DE 201 09 917 U und Patent Abstracts of Japan Bd. 2003, Nr. 02, 5. Februar 2003 (2003-02-05) und JP 2002 306908 A, 22. Oktober 2002 (2002-10-22)) und bestehen generell entsprechend den Vorgaben durch den Hersteller der Kraftfahrzeuge üblicherweise aus einem aus Kunststoff bestehenden Unterteil und einem aus Metall bestehenden Deckel. Das darin angeordnete Filtermedium trennt den Einlass von dem Auslass des Gehäuses derartiger Filter und ist an den Rändern zwischen Ober- und Unterteil eingeklemmt. Häufig besteht das Problem, dass der Raum, in welchem derartige Filter eingebaut werden, ausgesprochen beschränkt ist, was ebenfalls durch den Hersteller der Kraftfahrzeuge vorgegeben wird, während gleichzeitig eine hohe Filterleistung gefordert wird.

Der Erfindung liegt die Aufgabe zu Grunde, ein Filter der eingangs definierten Art dahingehend zu verbessern, dass innerhalb beschränkter Raumverhältnisse eine möglichst große Filterfläche vorgesehen werden kann.

Diese Aufgabe wird erfindungsgemäß bei einem Filter der eingangs definierten Art im wesentlichen dadurch gelöst, dass mindestens in einem Bereich des Gehäuses mindestens zwei übereinander im Abstand angeordnete Stützkörper vorgesehen sind, welche jeweils im Abstand von dem Oberteil bzw. dem Unterteil gehalten sind, und dass das Filtermedium in S-förmigen Schleifen um die Stützkörper gelegt ist, derart, dass in dem genannten Bereich das Filtermedium in mindestens drei Lagen übereinander wirksam ist.

Es ist offensichtlich, dass hierdurch bei geringstem Raumbedarf die Filterleistung eines derartigen Filters erheblich verbessert werden kann. Es ist offensichtlich, dass, soweit es die Raumverhältnisse erlauben oder die Form des Gehäuses es zulässt, die Anzahl der Stützkörper jeweils entsprechend vergrößert werden kann, so dass sich mittels der dadurch zusätzlich gebildeten Lagen des Filtermediums die Filterfläche nochmals erheblich vergrößern lässt.

Bei einer besonders bevorzugten Ausführungsform nach der Erfindung sind die Stützkörper parallel zueinander angeordnet, da hierdurch ein besonders günstiger Verlauf der Lagen des Filtermediums erreichbar ist.

Die Stützkörper sind ferner bevorzugt rahmenförmig ausgebildet, was den Vorteil bietet, dass hierdurch der Durchsatz des Filters kaum behindert wird.

Zum gleichen Zweck ist bei einer bevorzugten Ausführungsform der Erfindung vorgesehen, dass die Stützkörper auf ihren, das Filtermedium tragenden Seiten mit wellenartigen Vorsprüngen versehen sind. Hierdurch wird der Vorteil erzielt, dass das Filtermedium durch die Stützkörper nicht flächig, sondern lediglich an mehreren Punkten abgestützt wird.

Obwohl jede mögliche Verbindung, wie Einlegen, Klipsen oder Klemmen, verwendbar ist, ist es ferner bevorzugt, dass die Stützkörper mittels Tragarmen mit dem Unterteil bzw. dem Oberteil verbunden sind. Hierdurch wird die Herstellung eines derartigen Filters erleichtert, da keine aufwändigen Formen verwendet werden müssen.

Eine abgewandelte Ausführungsform der Erfindung kann dadurch geschaffen werden, dass die Stützkörper anstelle mit dem Gehäuse unmittelbar miteinander verbunden sind. Hierdurch wird eine besonders einfache Konstruktion geschaffen, wobei die Stützkörper quasi durch das Filtermedium getragen werden.

Im einzelnen lässt sich diese Ausführungsform dahingehend ausgestalten, dass die Stützkörper durch das Filtermedium durchdringende Zapfen die in Fassungen in dem jeweils benachbarten Stützkörper aufgenommen sind, miteinander verbunden sind. Dies stellt eine besonders einfache Konstruktion dar, wobei die Verbindung der Stützkörper miteinander entweder durch die Zapfen oder durch Einklipsen, Ultraschallschweißen, Verkleben oder ähnliche äquivalente Mittel erfolgen kann.

Nachdem bei dieser Ausführungsform die Zapfen oder dergleichen das Filtermedium durchdringen, ist es bevorzugt, dass die Verbindung der Stützkörper durch Dichtungen abgedichtet ist.

Eine weitere Abwandlung dieser Ausführungsform kann dadurch geschaffen werden, dass die Stützkörper miteinander und zusätzlich mit dem Unterteil des Gehäuses in abgedichteter Weise verbunden sind. Hierdurch wird erreicht, dass beim Zusammenbau des Filters die Führung und Lage des Filtermediums eindeutig definiert ist, so dass ausgeschlossen werden kann, dass Produktionsfehler dadurch auftreten, dass ein falscher Stützkörper an einem falschen Ort eingebaut wird.

Im einzelnen kann die Erfindung dadurch weiter gebildet werden, dass die Stützkörper aus Kunststoff bestehen, wobei bevorzugt ist, dass die Stützkörper aus dem gleichen Kunststoff wie das Unterteil und das Oberteil bestehen.

Als besonders zweckdienlicher Kunststoff wird ein PA 66 mit 30% Glasfaseranteil verwendet.

Bei einer bevorzugten Ausführungsform nach der Erfindung sind die Stützkörper durch Ultraschallschweißen mit dem Oberteil bzw. dem Unterteil verbunden.

Im einzelnen ist es ferner bevorzugt, dass das Filtermedium im Bereich der Innenränder von Flanschen an den Außenrändern von Ober- und Unterteil eingeklemmt und fixiert ist, und dass zur Verbindung von Ober- und Unterteil die Flansche miteinander verschweißt sind.

Im folgenden wird die Erfindung anhand einer in den Zeichnungen beispielhaft veranschaulichten Ausführungsform näher erläutert. Es zeigt:
**FIGUR 1** eine Draufsicht auf einen Filter nach der Erfindung;
**FIGUR 2** eine Schnittansicht längs der Linie A-A von Figur 1 und
**FIGUR 3** eine vergrößerte Einzelheit einer zweiten Ausführungsform nach der Erfindung.

Wie aus den Zeichnungen ersichtlich, weist der Filter 1, welcher für das Getriebeöl in Automatikgetrieben gedacht ist, ein aus einem Oberteil 2 und einem Unterteil 4 bestehendes Gehäuse 6 auf.

Das Gehäuse 6 ist mit einem Einlass 8 und einem Auslass 10 versehen. Ein den Einlass 8 von dem Auslass 10 trennendes Filtermedium 12 ist in dem Gehäuse 6 angeordnet, wobei das Filtermedium 12 zwischen einem umlaufenden Flansch 3 am Oberteil 2 und einem umlaufenden Flansch 5 am Unterteil 4 im Bereich von deren Innenrändern eingeklemmt und fixiert ist. Bei der Herstellung werden die Flansche 3 und 5 miteinander verschweißt, um das Oberteil 2 mit dem Unterteil 4 zu verbinden.

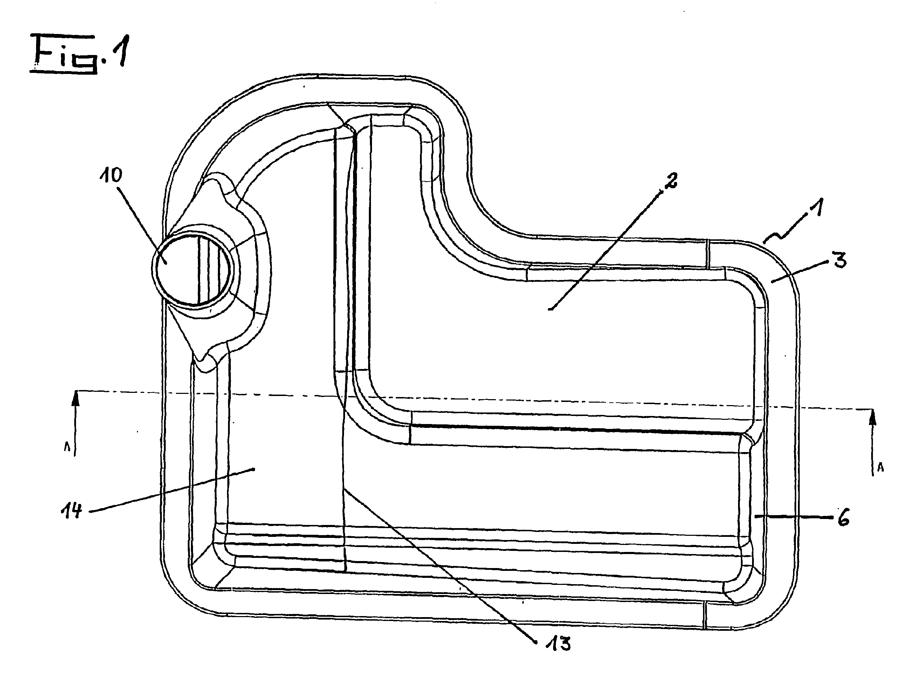

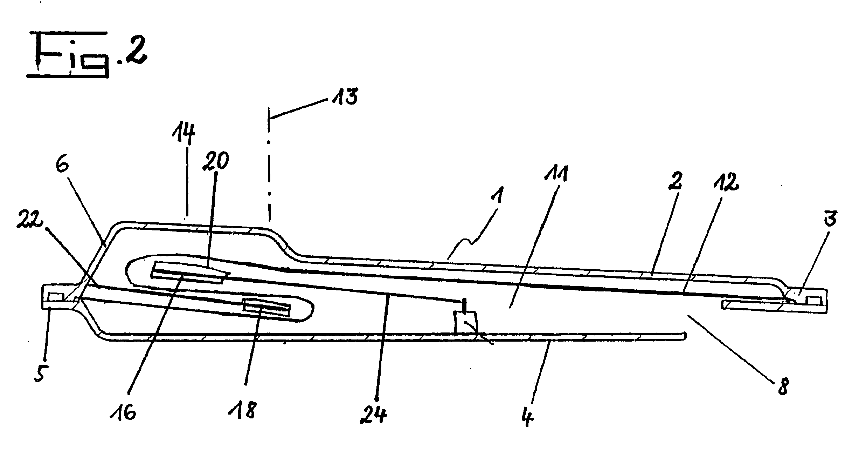

Zur erheblichen Vergrößerung der verfügbaren Filterfläche des Filtermediums 12 bei gegebenem Rauminhalt des Innenraumes 11 des Gehäuses 6 sind erfindungsgemäß mindestens in dem durch die Linie 13 in Figur 1 und 2 abgegrenzten Bereich 14 mindestens zwei übereinander im Abstand angeordnete Stützkörper 16 und 18 vorgesehen, welche jeweils im Abstand von dem Oberteil 2 bzw. dem Unterteil 4 gehalten sind. Wie insbesondere aus Figur 2 ersichtlich, ist das Filtermedium 12 S-förmig um die Stützkörper 16 und 18 gelegt, so dass in dem Bereich 14 das Filtermedium 12 in drei Lagen übereinander wirksam ist und somit in dem Bereich 14 die verfügbare Filterfläche verdreifacht ist. Will man die Filterfläche nochmals vergrößern, so können weitere Stützkörper 16, 18 vorgesehen werden, um welche das Filtermedium 12 in weiteren Schlingen geführt ist.

Die Stützkörper 16 und 18 sind bevorzugt in Form von etwa dem Bereich 14 entsprechenden Rahmen ausgebildet und weisen auf ihren, das Filtermedium 12 abstützenden Seiten wellenartige Vorsprünge 20 auf, so dass die Filtration durch die Stützkörper 16 und 18 kaum behindert wird.

Wie aus Figur 2 ersichtlich, ist der Stützkörper 16 über mindestens einen Tragarm 22 mit dem Oberteil 2 verbunden, während der Stützkörper 18 über mindestens einen entsprechenden Tragarm 24 mit dem Unterteil 4 verbunden ist.

Bevorzugt bestehen sowohl der Oberteil 2 als auch der Unterteil 4 und die Stützkörper 16 und 18 aus Kunststoff, wobei insbesondere bevorzugt diese Teile sämtlich aus dem gleichen Kunststoff hergestellt sind. Als zweckdienlich hat sich insbesondere ein PA 66 mit 30% Glasfaseranteil erwiesen.

Um aufwändige Formkosten für Ober- und Unterteile zu sparen, sind die Stützkörper 16, 18 über ihre Tragarme 22 und 24 durch Ultraschallschweißen mit dem Oberteil 2 bzw. dem Unterteil 4 verbunden.

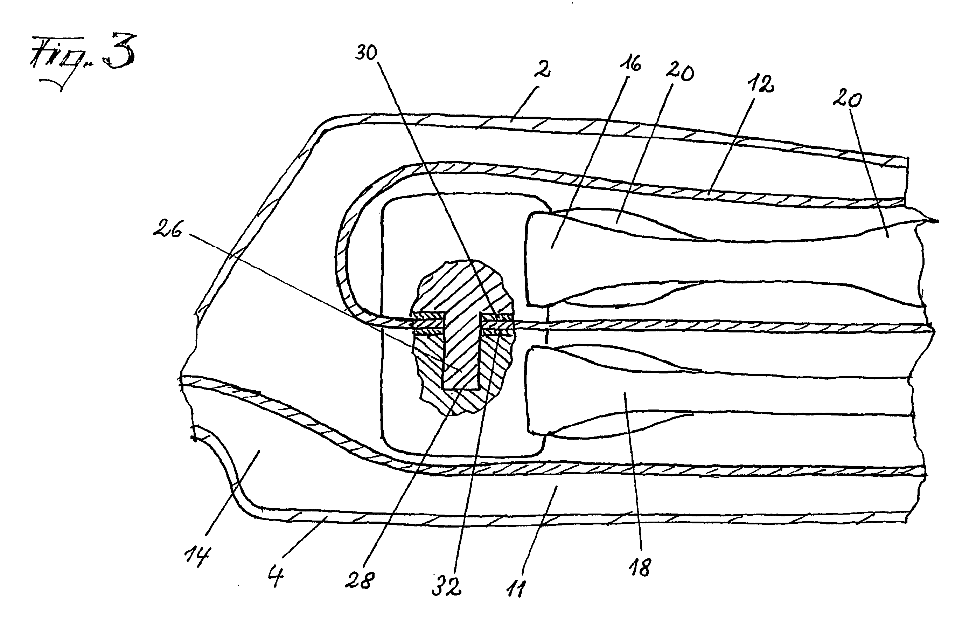

Bei der Ausführungsform gemäß Figur 3, in welcher lediglich ein Teil des Filters dargestellt ist, nämlich der Bereich, in welchem die Stützkörper 16, 18, angeordnet sind, sind diese abweichend von der oben beschriebenen Ausführungsform nicht über Tragarme mit dem Unterteil 4 bzw. dem Oberteil 2 verbunden. Anstelle dessen sind die Stützkörper 16, 18 miteinander verbunden und weisen keine Verbindung zum Gehäuse 6 auf.

Bei dem dargestellten Ausführungsbeispiel sind die Stützkörper 16 und 18 mittels eines am Stützkörper 16 vorstehenden Zapfens 26, der in eine Fassung 28 im Stützkörper 18 eingreift, verbunden, wobei der Zapfen 26 das Filtermedium 12 durchdringt.

Um zu vermeiden, dass an dieser Stelle ein Leck in dem Filtermedium 12 auftritt, sind an der durch den Zapfen 26 und die Fassung 28 hergestellten Verbindung der Stützkörper 18 Dichtungen 30, 32 vorgesehen, welche die Verbindungsstelle abdichten.

Die in Figur 3 dargestellte Ausführungsform kann noch weiterhin dahingehend abgewandelt werden, dass die Stützkörper 16, 18 in der dargestellten Weise miteinander verbunden sind und zusätzlich eine weitere Verbindung zu dem Unterteil 4 des Gehäuses 6 aufweisen, welche durch Ultraschallschweißen, Kleben, Einrasten oder vergleichbare Verbindungsmittel hergestellt und ebenfalls abgedichtet ist.

Um zu vermeiden, dass sich das Filtermedium bei der Filtration an die Wandungen des Gehäuses anlegen kann, sind bei besonders bevorzugten Ausführungsformen die Innenflächen des Oberteils 2 bzw. Unterteils 4 mit in Reihen angeordneten vorstehenden Segmenten ausgestattet (in den Zeichnungen nicht dargestellt), wie dies gemäß einem früheren Vorschlag des Anmelders in dem DE-GM 201 09 917.9 im einzelnen beschrieben ist.

### BEZUGSZEICHENLISTE

- 1 =: Filter
- 2 =: Oberteil
- 3 =: Flansch
- 4 =: Unterteil
- 5 =: Flansch
- 6 =: Gehäuse
- 8 =: Einlass
- 10 =: Auslass
- 11 =: Innenraum
- 12 =: Filtermedium
- 13 =: Linie
- 14 =: Bereich von 6
- 16 =: Stützkörper
- 18 =: Stützkörper
- 20 =: Vorsprünge
- 22 =: Tragarm
- 24 =: Tragarm
- 26 =: Zapfen
- 28 =: Fassung
- 30 =: Dichtung
- 32 =: Dichtung

## Patentansprüche

1. Filter (1) für das Getriebeöl in Automatikgetrieben von Kraftfahrzeugen, mit einem aus einem Oberteil (2) und einem mit diesem verbundenen Unterteil (4) bestehenden Gehäuse (6), mit einem Einlass (8) und einem Auslass (10), wobei zwischen Oberteil (2) und Unterteil (4) ein den Einlass (8) von dem Auslass (10) voneinander trennendes Filtermedium (12) angeordnet ist, und wobei das Filtermedium (12) um Stützkörper (16, 18) geführt und durch diese gehalten ist, **dadurch gekennzeichnet, dass** mindestens in einem Bereich (14) des Gehäuses (6) mindestens zwei übereinander im Abstand angeordnete Stützkörper (16, 18) vorgesehen sind, welche jeweils im Abstand von dem Oberteil (2) bzw. Unterteil (4) gehalten sind, und dass das Filtermedium (12) in S-förmigen Schleifen um die Stützkörper (16, 18) gelegt ist, derart, dass in dem Bereich (14) das Filtermedium (12) in mindestens drei Lagen übereinander wirksam ist.

2. Filter nach Anspruch 1, **dadurch gekennzeichnet, dass** die Stützkörper (16, 18) parallel zueinander angeordnet sind.

3. Filter nach Anspruch 1 oder 2, **dadurch gekennzeichnet, dass** die Stützkörper (16, 18) rahmenförmig ausgebildet sind.

4. Filter nach einem der vorstehenden Ansprüche, **dadurch gekennzeichnet, dass** die Stützkörper (16, 18) auf ihren, das Filtermedium (12) tragenden Seiten mit wellenartigen Vorsprüngen (20) versehen sind.

5. Filter nach einem der vorstehenden Ansprüche, **dadurch gekennzeichnet, dass** die Stützkörper (16, 18) mittels Tragarmen (22, 24) mit dem Unterteil (4) bzw. dem Oberteil (2) verbunden sind.

6. Filter nach einem der Ansprüche 1 bis 4, **dadurch gekennzeichnet, dass** die Stützkörper (16, 18) miteinander verbunden sind.

7. Filter nach Anspruch 6, **dadurch gekennzeichnet, dass** die Stützkörper (16, 18) durch das Filtermedium (12) durchdringende Zapfen (26) die in Fassungen (28) in dem jeweils benachbarten Stützkörper (18, 16) aufgenommen sind, miteinander verbunden sind.

8. Filter nach Anspruch 6 oder 7, **dadurch gekennzeichnet, dass** die Verbindung (26, 28) der Stützkörper (16, 18) durch Dichtungen (30, 32) abgedichtet ist.

9. Filter nach einem der Ansprüche 1 bis 4 und 6 bis 8, **dadurch gekennzeichnet, dass** die Stützkörper (16, 18) miteinander und mit dem Unterteil (4) des Gehäuses (6) in abgedichteter Weise verbunden sind.

10. Filter nach einem der vorstehenden Ansprüche, **dadurch gekennzeichnet, dass** die Stützkörper (16, 18) aus Kunststoff bestehen.

11. Filter nach Anspruch 10, **dadurch gekennzeichnet, dass** die Stützkörper (16, 18) aus dem gleichen Kunststoff wie das Oberteil (2) und das Unterteil (4) bestehen.

12. Filter nach Anspruch 10 oder 11, **dadurch gekennzeichnet, dass** der Kunststoff ein PA 66 mit 30% Glasfaseranteil ist.

13. Filter nach einem der Ansprüche 10 bis 12, **dadurch gekennzeichnet, dass** die Stützkörper (16, 18) durch Ultraschallschweißen mit dem Oberteil (2) bzw. Unterteil (4) verbunden sind.

14. Filter nach einem der vorstehenden Ansprüche, **dadurch gekennzeichnet, dass** das Filtermedium (12) im Bereich der Innenränder von Flanschen (3, 5) an den Außenrändern von Ober- und Unterteil (2, 4) eingeklemmt und fixiert ist, und dass zur Verbindung von Ober- und Unterteil (2, 4) die Flansche (3, 5) miteinander verschweißt sind.

## Claims

1. Filter for the transmission oil in automatic transmissions of motor vehicles, having a housing (6) with an inlet (8) and an outlet (10), consisting of a top part (2) and a bottom part (4) connected therewith, wherein between the top part (2) and the bottom part there is positioned a filter medium (12) separating the inlet (8) from the outlet (10) and, wherein the filter medium (12) is guided around supporting bodies (16, 18) and is held by these, **characterized in that** at least in an area (14) of the housing (6) there are provided at least two supporting bodies (16, 18) which are positioned above each other in a distance and which each are held in a distance from the top part (2) and the bottom part (4), respectively, and that the filter medium (12) is guided around the supporting bodies (14) in S-shaped loops such that in the area (14) the filter medium (12) is effective in at least three stacked layers.

2. Filter according to claim 1, **characterized in that** the supporting bodies (16, 18) are arranged parallel to each other.

3. Filter according to claim 1 or 2, **characterized in that** the supporting bodies (16, 18) are having the shape of a frame.

4. Filter according to any of the preceding claims, **characterized in that** the supporting bodies (16, 18) are having wave-shaped projections (20) on their surfaces carrying the filter medium (12).

5. Filter according to any of the preceding claims, **characterized in that** the supporting bodies (16, 18) by means of supporting arms (22, 24) are connected with the bottom part (4) and the top part (2), respectively.

6. Filter according to any of the claims 1 to 4, **characterized in that** the supporting bodies (16, 18) are connected with each other.

7. Filter according to claim 6, **characterized in that** the supporting bodies (16, 18) are connected with each other by pins (26) passing through the filter medium and being received in sockets (28) of the respective adjacent supporting body (18, 16).

8. Filter according to claim 6 or 7, **characterized in that** the connection (26, 28) of the supporting bodies (16, 18) is sealed by seals (30, 32).

9. Filter to any of the claims 1 to 4 and 6 to 8, **characterized in that** the supporting bodies (16, 18) are connected with each other and the bottom part (4) of the housing (6) in a sealed manner.

10. Filter according to any of the preceding claims, **characterized in that** the supporting bodies (16, 18) are consisting of plastics material.

11. Filter according to claim 10, **characterized in that** the supporting bodies (16, 18) are consisting of the same plastics material as the top part (2) and the bottom part (4).

12. Filter according to claim 10 or 11, **characterized in that** the plastics material is a PA 66 having a glass-fibre content of 30%.

13. Filter according to any of the claims 10 to 12, **characterized in that** the supporting bodies (16, 18) are connected with the top part (2) and the bottom part (4), respectively, by means of ultrasonic welding.

14. Filter according to any of the preceding claims, **characterized in that** the filter medium (12) is clamped and fixed in the region of the inner margins of flanges (3, 5) at the exterior edge of the top part (2) and bottom part (4), and that for connecting the top part (2) with the bottom part (4) the flanges (3, 5) are welded together.

## Revendications

1. Filtre (1) pour huile d'engrenage dans des boîtes de vitesses automatiques de véhicules automobiles, comportant un carter (6), formé par une partie supérieure (2) et une partie inférieure (4) assemblée à celle-ci, une admission (8) et une sortie (10), un produit de filtrage (12), séparant l'admission (8) de la sortie (10), étant disposé entre la partie supérieure (2) et la partie inférieure (4), et le produit de filtrage (12) étant guidé autour de corps de support (16, 18) et étant maintenu par ceux-ci, **caractérisé en ce qu'**au moins dans une zone (14) du carter (6) sont prévus au moins deux corps de support (16, 18) disposés à distance l'un au-dessus de l'autre, lesquels sont maintenus à distance respectivement de la partie supérieure (2) et de la partie inférieure (4), et **en ce que** le produit de filtrage (12) est posé en méandres en forme de S autour des corps de support (16, 18), de telle sorte que dans la zone (14) le produit de filtrage (12) est actif en au moins trois couches superposées.

2. Filtre selon la revendication 1, **caractérisé en ce que** les corps de support (16, 18) sont disposés parallèlement l'un à l'autre.

3. Filtre selon la revendication 1 ou 2, **caractérisé en ce que** les corps de support (16, 18) sont réalisés sous forme de cadres.

4. Filtre selon l'une quelconque des revendications précédentes, **caractérisé en ce que** les corps de support (16, 18) sont munis de saillies (20) ondulées sur leurs côtés portant le produit de filtrage (12).

5. Filtre selon l'une quelconque des revendications précédentes, **caractérisé en ce que** les corps de support (16, 18) sont reliés au moyen de bras de support (22, 24) avec respectivement la partie inférieure (4) et la partie supérieure (2).

6. Filtre selon l'une quelconque des revendications 1 à 4, **caractérisé en ce que** les corps de support (16, 18) sont assemblés l'un à l'autre.

7. Filtre selon la revendication 6, **caractérisé en ce que** les corps de support (16, 18) sont assemblés par des tenons (26), qui passent à travers le produit de filtrage (12) et qui sont logés dans des douilles (28) dans le corps de support (18, 16) respectivement adjacent.

8. Filtre selon la revendication 6 ou 7, **caractérisé en ce que** l'assemblage (26, 28) des corps de support (16, 18) est rendu étanche par des garnitures d'étanchéité (30, 32).

9. Filtre selon l'une quelconque des revendications 1 à 4 et 6 à 8, **caractérisé en ce que** les corps de support (16, 18) sont assemblés de manière étanche l'un à l'autre et à la partie inférieure (4) du carter (6).

10. Filtre selon l'une quelconque des revendications précédentes, **caractérisé en ce que** les corps de support (16, 18) sont réalisés en matière plastique.

11. Filtre selon la revendication 10, **caractérisé en ce que** les corps de support (16, 18) sont réalisés dans la même matière plastique que la partie supérieure (2) et la partie inférieure (4).

12. Filtre selon la revendication 10 ou 11, **caractérisé en ce que** la matière plastique est un polyamide 66 avec une teneur en fibres de verre de l'ordre de 30 %.

13. Filtre selon l'une quelconque des revendications 10 à 12, **caractérisé en ce que** les corps de support (16, 18) sont assemblés par soudage à ultrasons à la partie supérieure (2) et à la partie inférieure (4).

14. Filtre selon l'une quelconque des revendications précédentes, **caractérisé en ce que** le produit de filtrage (12) est serré et fixé dans la zone des bords intérieurs de collerettes (3, 5), réalisées sur les bords extérieurs de la partie supérieure (2) et de la partie inférieure (4), et **en ce que** les collerettes (3, 5) sont soudées l'une à l'autre pour l'assemblage de la partie supérieure (2) avec la partie inférieure (4).
